# EUROPEAN PATENT APPLICATION

(11) **EP 4 837 793 A1**
(43) Date of publication of application: **11.11.2026**
(21) Application number: 26166290.2
(22) Date of filing: 20.03.2026
(51) Int. Cl.: B60S 1/04, B60S 1/58

(54) **VEHICLE REAR ASSEMBLY, VEHICLE COMPRISING THE SAME, AND METHOD OF ASSEMBLING THE SAME**

(30) Priority: 07.05.2025 CN 202510589072
(71) Applicant: Stellantis Auto SAS, 78300 Poissy (FR)
(72) Inventor: WU, TING, SHANGHAI, 200030 (CN); FIALA, DANIEL HENRIQUE, 25600 SOCHAUX (FR); XI, JIA HAO, SHANGHAI, 200030 (CN); ABDELMOUMNI, RACHID, 25600 SOCHAUX (FR); BUSSON, YVAN, 25600 SOCHAUX (FR)
(74) Representative: BCIP

(57) **Abstract**

The present disclosure relates to a vehicle rear assembly, a vehicle comprising the same, and a method of assembling the same. The vehicle rear assembly comprises a tailgate inner panel and a motor housing, a plurality of fasteners are pre-mounted to the motor housing, the tailgate inner panel is provided with a through hole comprising a first portion and a second portion communicated with each other, the vehicle rear assembly further comprises a hook portion provided on the motor housing, the hook portion being configured to be capable of passing through the through hole via the first portion, such that an end of the hook portion is capable of abutting against the tailgate inner panel, and the motor housing is capable of being fixedly connected to the tailgate inner panel by the plurality of fasteners after the hook portion moves to the second portion. According to the vehicle rear component, the fastener is pre-mounted to the motor housing, and the hook portion is provided on the motor housing with a corresponding through hole provided on the tailgate inner panel, thereby improving the assembly efficiency of the motor while preventing the motor from falling off to enhance assembly safety.

## Description

### RELATED FIELD

The present disclosure relates generally to the field of vehicle components, and more specifically, to a vehicle rear assembly, a vehicle comprising the same, and a method of assembling the same.

### BACKGROUND

In the design of the vehicle body structure, the motor of the wiper system is usually mounted to the tailgate inner panel by fasteners. The current assembly process requires the operator to hold the motor with one hand to maintain its mounting posture, while taking the fastener and operating tool with the other hand to complete the overall assembly operation.

Since no pre-mounted or anti-falling structure is provided on the motor or the tailgate inner panel, the assembly process is complicated and the stability of the motor is insufficient. This assembly process may not only cause personnel safety accidents, for example, the motor falls off to cause limb injuries of the operator, but also cause damage to the motor to affect the product performance.

### SUMMARY

An object of the present disclosure is to provide a vehicle rear assembly that is easy to be mounted and can prevent the motor from falling off.

To this end, a first aspect of the present disclosure provides a vehicle rear assembly, comprising a tailgate inner panel and a motor housing, wherein a plurality of fasteners are pre-mounted to the motor housing, the tailgate inner panel is provided with a through hole comprising a first portion and a second portion communicated with each other, and the vehicle rear assembly further comprises a hook portion provided on the motor housing, and the hook portion is configured to be capable of passing through the through hole via the first portion, such that an end of the hook portion is capable of abutting against the tailgate inner panel, and the motor housing is capable of being fixedly connected to the tailgate inner panel by the plurality of fasteners after the hook portion moves to the second portion.

According to an optional embodiment of the present disclosure, the hook portion comprises: an extending section extending from the motor housing and passing through the through hole; an abutting section being capable of abutting against the tailgate inner panel; and a bending section connecting the extending section to the abutting section, wherein the extending section is configured to maintain spaced apart from an edge of the first portion and / or an edge of the second portion by a gap.

According to an alternative embodiment of the present disclosure, the gap is between 1 mm and 2 mm.

According to an optional embodiment of the present disclosure, the first portion and the second portion form an L-shaped hole together.

According to an optional embodiment of the present disclosure, the tailgate inner panel is provided with a plurality of first mounting holes for the plurality of fasteners to pass through, the motor housing comprises a body and a plurality of connecting portions extending from the body, each of the plurality of connecting portions being provided with a second mounting hole aligned with a corresponding first mounting hole, and the hook portion extends from one of the plurality of connecting portions.

According to an optional embodiment of the present disclosure, the motor housing further comprises a washer embedded in the second mounting hole, the fastener is pre-mounted to the washer, and the fastener is provided as a screw.

According to an optional embodiment of the present disclosure, the motor housing is made of plastic.

A second aspect of the present disclosure provides a vehicle, comprising the vehicle rear assembly according to the first aspect of the present disclosure.

A third aspect of the present disclosure provides an method of assembling the vehicle rear assembly according to the first aspect of the present disclosure, comprising: providing the tailgate inner panel and the motor housing pre-mounted with the plurality of fasteners; passing the hook portion through the through hole via the first portion, such that the end of the hook portion is capable of abutting against the tailgate inner panel, wherein the tailgate inner panel and the motor housing are separated by a spacing; moving the hook portion from the first portion to the second portion; and attaching and fixedly connecting the motor housing to the tailgate inner panel through the plurality of fasteners.

Compared with the prior art, the vehicle rear assembly according to the present disclosure has a plurality of advantages, especially: the fastener is pre-mounted to the motor housing, and the hook portion is provided on the motor housing with a corresponding through hole provided on the tailgate inner panel, thereby improving the assembly efficiency of the motor while preventing the motor from falling off to enhance assembly safety.

### BRIEF DESCRIPTION OF THE DRAWINGS

Other features and advantages of the present disclosure will be better understood through the following preferred embodiments described in detail in connection with accompanying drawings. In the drawings, same reference numerals indicate same or similar components.
FIG. 1 is a perspective view of one embodiment of a vehicle rear assembly according to the present disclosure, with an enlarged portion showing an area for mounting a motor housing;
FIG. 2 is another perspective view of the vehicle rear assembly with an enlarged portion showing the area for mounting the motor housing;
FIG. 3 is a perspective view of the motor housing in FIG. 1;
FIG. 4 is another perspective view of the motor housing in FIG. 1;
FIG. 5 is a partial enlarged view of the area for mounting the motor housing in FIG. 1 at a hook position;
FIG. 6 is a partial enlarged view of the area of the tailgate inner panel in FIG. 1 for mounting a motor housing;
FIGS. 7a to 7c are perspective views of the hook portion located in the first portion of the through hole at different angles;
FIGS. 8a to 8c are perspective views of the hook portion located in the second portion of the through hole at different angles.

### DETAILED DESCRIPTION

The implementation and usage of specific embodiments are discussed in detail below. However, it should be understood that the discussed specific embodiments are merely intended to illustrate specific ways of implementing and using the present disclosure, and are not intended to limit the scope of the present disclosure.

In this specification, directional expressions such as "upper", "lower", "left", "right" and the like are not absolute but are relative when describing the structural positions of various components. When the components are arranged as shown in the figures, these directional expressions are appropriate, but when the positions of the components in the figures are changed, these directional expressions should be changed accordingly.

In addition, in this specification, unless otherwise clearly specified and defined, terms such as "mount" and "connect" should be understood in a broad sense, for example, may be a fixed connection, a detachable connection, or an integral connection; may be a direct connection, an indirect connection through an intermediate medium, or an internal communication between two elements or an interaction relationship between two elements. For those skilled in the art, the specific meanings of the above terms in the present specification can be understood according to specific situations.

In this specification and the accompanying drawings, "front" and "rear" are both defined with respect to the front-rear direction along the X-direction of the vehicle. In addition, the X direction represents a longitudinal direction of the vehicle (i.e., a traveling direction of the vehicle), the Y direction represents a transverse direction of the vehicle (i.e., a direction at an angle of 90 degrees with respect to the traveling direction), and the Z direction represents a vertical direction of the vehicle (i.e., an up-down direction). In addition, in this specification, "inner" and "outer" are both defined with respect to the direction of the vehicle, that is, "inner side" refers to the side oriented towards the interior of the vehicle, and "outer side" refers to the side oriented towards the exterior of the vehicle.

A preferred embodiment of the vehicle rear assembly A according to the present disclosure will be described in detail below with respect to the accompanying drawings.

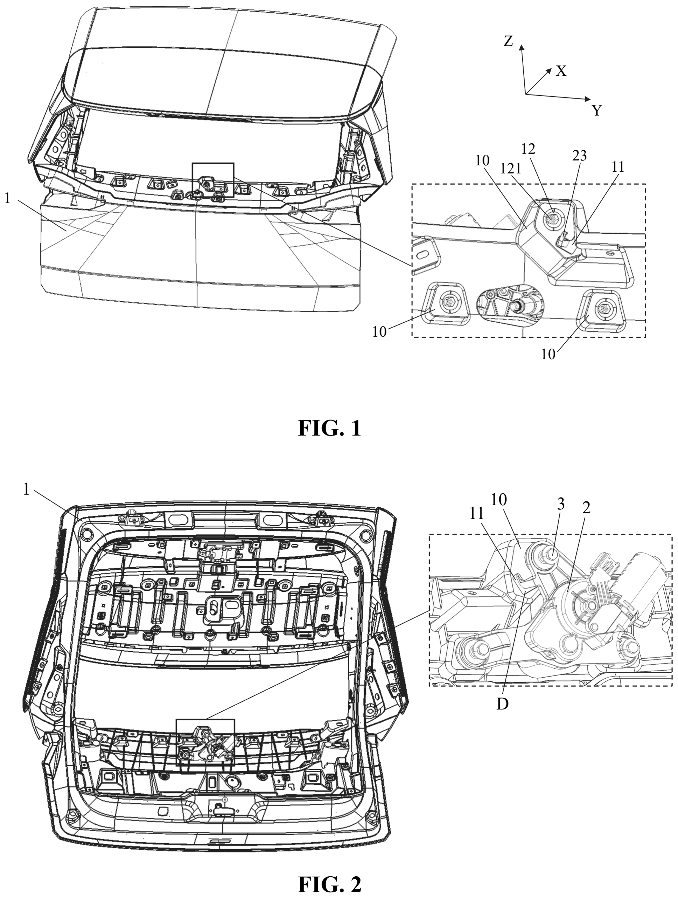

As shown in FIGS. 1 to 3, the vehicle rear assembly A according to the present disclosure comprises a tailgate inner panel 1 and a wiper motor housing 2 mounted to an inner side of the tailgate inner panel 1.

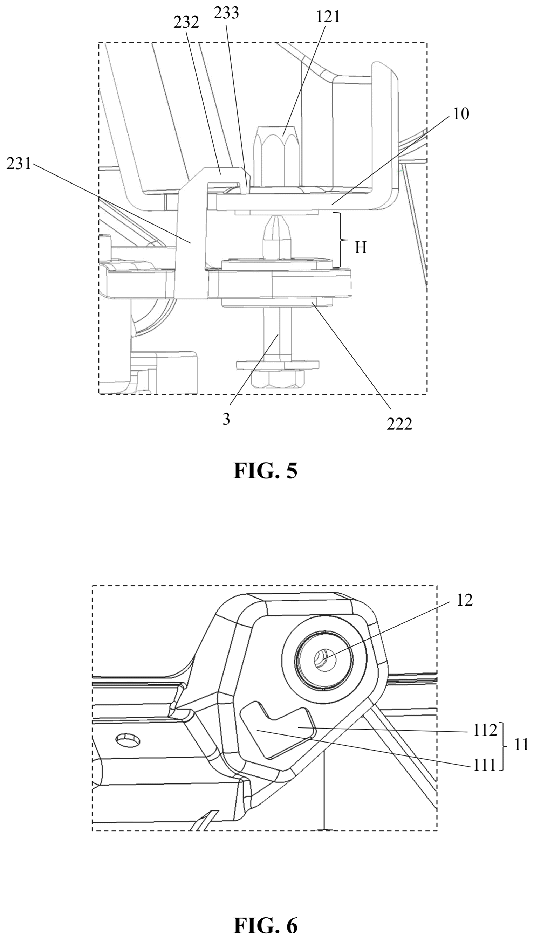

At a position adjacent to a lower edge of the glass opening, the tailgate inner panel 1 is provided with three mounting bosses 10, each of the mounting bosses 10 is provided with one first mounting hole 12, and one of the mounting bosses 10 is provided with a through hole 11. A nut 121 is embedded in the first mounting hole 12. The through hole 11 comprises a first portion 111 and a second portion 112 communicated with each other, and the first portion 111 and the second portion 112, for example, form an L-shaped hole together (as shown in FIG. 6).

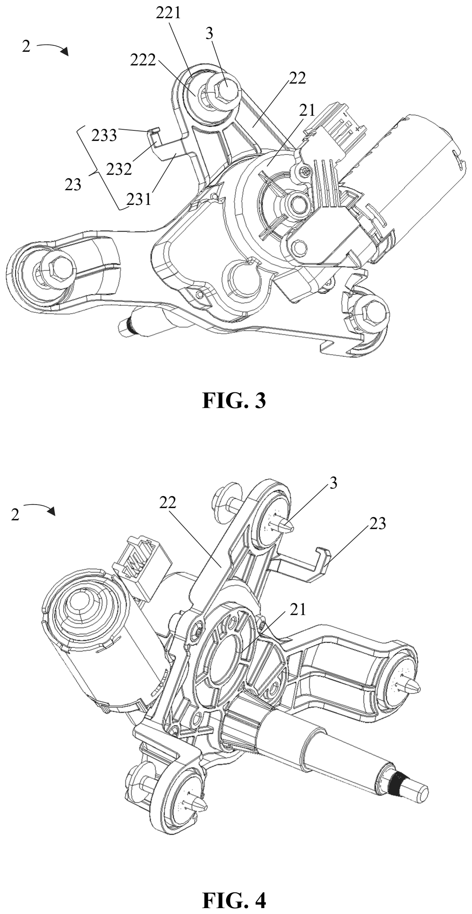

As shown in FIGS. 3 and 4, the motor housing 2 comprises a body 21 and three connecting portions 22 extending from the body 21, and each of the three connecting portions 22 is provided with a second mounting hole 221 aligned with the corresponding first mounting hole 12. The metal washer 222 is embedded in the second mounting hole 221, the hole diameter of the washer 222 is slightly smaller than that the diameter of the fastener 3, and the fastener 3 is pre-mounted into the washer 222 through an interference fit, thereby saving the steps for the operator to lift the motor housing 2 and then mount the fasteners 3 to the motor housing 2 one by one, which improves the mounting efficiency. Preferably, the fastener 3 is provided as a screw or a stud.

According to the present disclosure, the motor housing 2 is provided with a hook portion 23 extending from one of the three connecting portions 22, and the hook portion 23 is configured to pass through the through hole 11 via the first portion 111, such that the end of the hook portion 23 is capable of abutting against the tailgate inner panel 1, and the motor housing 2 is capable of being fixedly connected to the tailgate inner panel 1 by passing the fastener 3 through the corresponding first mounting hole 12 after the hook portion 23 moves to the second portion 112.

More specifically, as shown in FIGS. 3 to 5, the hook portion 23 comprises an extending section 231, an abutting section 233 and a bending section 232. The extending section 231 extends from the motor housing 2 and passes through the through hole 11 from the inner side of the tailgate inner panel 1, such that the abutting section 233 is capable of abutting against the outer side of the tailgate inner panel 1, and the bending section 232 connects the extending section 231 to the abutting section 233. The bending section 232 forms a substantially right angle with the extending section 231 and the abutting section 233 such that the extending section 231 and the abutting section 233 are substantially parallel to each other. The extending section 231 is configured to maintain spaced apart from an edge of the first portion 111 and / or an edge of the second portion 112 by a gap D. It can be understood that the gap D refers to a gap D existing between the extending section 231 and the edge of the first portion 111 and/or the edge of the second portion 112 and maintained at any position during the movement of the extending section 231 in the through hole 11. Preferably, the gap D is between 1 mm and 2 mm, thereby preventing the hook portion 23 from interfering with the through hole 11 during movement process.

Preferably, the motor housing 2 is made of plastic. Since the present disclosure does not need to achieve an accurate guiding effect through the hook portion 23 and the through hole 11, the plastic material is sufficient to meet the requirements on the manufacturing accuracy of the hook portion 23 and the through hole 11, and only one hook portion 23 needs to be provided to prevent the motor housing 2 from falling off. Compared to other materials such as metal, the plastic is better to meet the requirements for vehicle light weighting and environmental friendliness, while also offering lower cost.

A method of assembling such a vehicle rear assembly A is briefly described below.

When the vehicle rear assembly A is assembled, a tailgate inner panel 1 and a motor housing 2 are first provided, wherein the motor housing 2 is pre-mounted with three screws. At this time, the vehicle tailgate is in a raised state, the motor housing 2 is located on the lower side of the tailgate, and has a natural falling tendency under the force of gravity, and the operator stands below the tailgate.

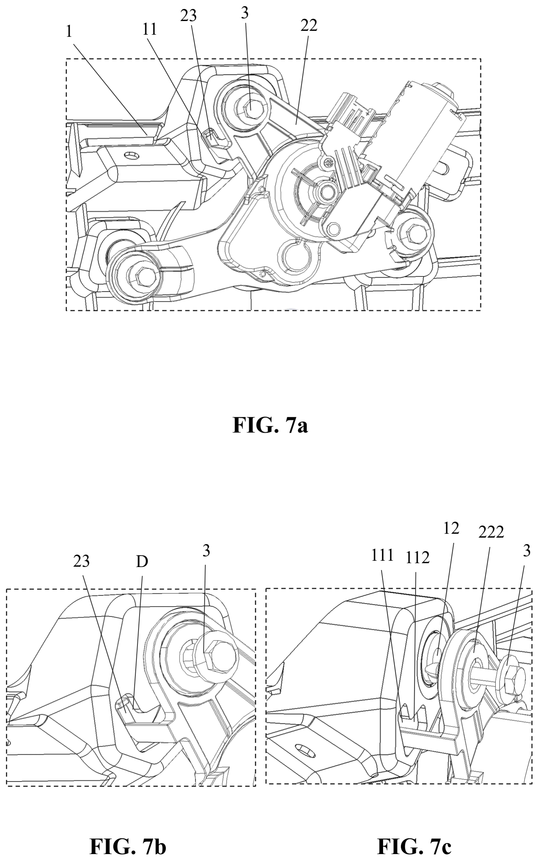

As shown in FIGS. 7a, 7b and 7c, an operator (not shown) may hold the motor housing 2, and pass the hook portion 23 through the through hole 11 via the first portion 111, such that the end of the hook portion 23 (i.e., the end of the abutting section 233) is capable of abutting against the tailgate inner panel 1, and at this time, the tailgate inner panel 1 and the motor housing 2 are separated by a spacing H (as shown in FIG. 5), and the spacing H is at least greater than the length of the screw extending out of the first mounting hole 12 to avoid interference between the screw and the tailgate inner panel 1.

In the actual mounting process, a spacing of, for example, at least 1 mm may be maintained between the end of the hook portion 23 and the tailgate inner panel 1, and the extending section 231 is configured to maintain a gap D with the edge of the first portion 111 and/or with the edge of the second portion 112, such that the hook portion 23 may always be in a suspended state during the mounting process to facilitate the movement of the hook portion 23 to drive the screw to adjust the position, and when the operator releases his hand, the end of the abutting section 233 of the hook portion 23 is capable of abutting against the tailgate inner panel 1 to play a role of preventing falling off.

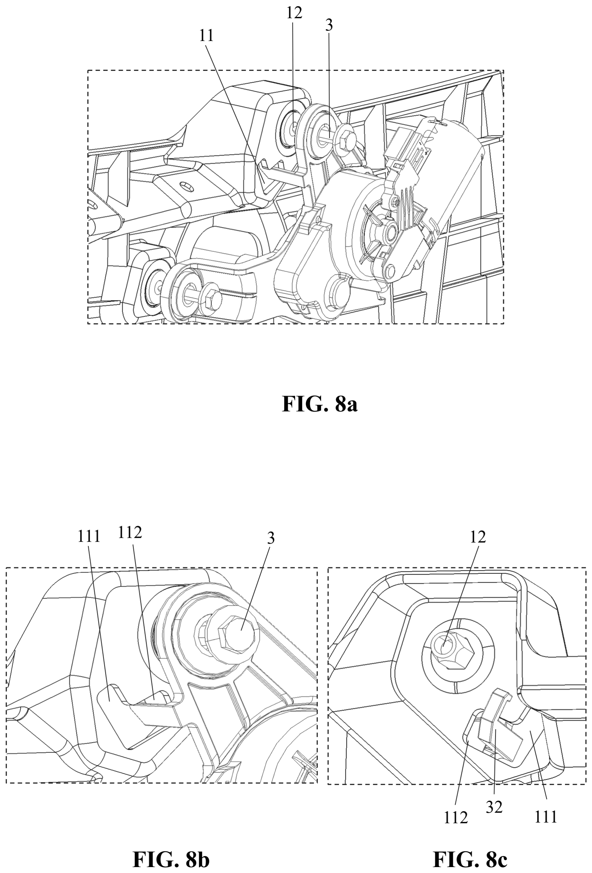

Then, as shown in FIGS. 8a to 8c, the operator rotates and/or translates the motor housing 2 to move the hook portion 23 from the first portion 111 to the second portion 112 along the corner of the L-shaped hole, such that each of the screws is aligned with the corresponding first mounting hole 12. Finally, the operator pushes the motor housing 2 towards the tailgate inner panel 1 along the axial direction of the screws and fastens the three screws to the nuts in the first mounting holes 12, such that the motor housing 2 is attached and fixedly connected to the tailgate inner panel 1.

The technical contents and features of the present disclosure have been disclosed above. However, it is conceivable that, those skilled in the art can make various changes and improvements to the above concept under the creative idea of the present disclosure, all of which fall within the protection scope of the present disclosure.

The description of the foregoing embodiments is illustrative rather than limitative, and the scope of protection of the present disclosure is determined by the appended claims.

## Claims

1. A vehicle rear assembly (A), comprising a tailgate inner panel (1) and a motor housing (2), wherein
a plurality of fasteners (3) are pre-mounted to the motor housing (2), and
the tailgate inner panel (1) is provided with a through hole (11) comprising a first portion (111) and a second portion (112) communicated with each other,
and wherein the vehicle rear assembly (A) further comprises a hook portion (23) provided on the motor housing (2), and the hook portion (23) is configured to be capable of passing through the through hole (11) via the first portion (111), such that an end of the hook portion (23) is capable of abutting against the tailgate inner panel (1), and the motor housing (2) is capable of being fixedly connected to the tailgate inner panel (1) through the plurality of fasteners (3) after the hook portion (23) moves to the second portion (112).

2. The vehicle rear assembly (A) according to claim 1, wherein the hook portion (23) comprises:
an extending section (231) extending from the motor housing and passing through the through hole (11);
an abutting section (233) being capable of abutting against the tailgate inner panel; and
a bending section (232) connecting the extending section (231) to the abutting section (233);
and wherein the extending section (231) is configured to maintain spaced apart from an edge of the first portion (111) and/or an edge of the second portion (112) by a gap (D).

3. The vehicle rear assembly (A) according to claim 2, wherein
the gap (D) is between 1 mm and 2 mm.

4. The vehicle rear assembly (A) according to claim 1, wherein
the first portion (111) and the second portion (112) form an L-shaped hole together.

5. The vehicle rear assembly (A) according to claim 1, wherein
the tailgate inner panel is provided with a plurality of first mounting holes (12) for the plurality of fasteners to pass through,
the motor housing comprises a body (21) and a plurality of connecting portions (22) extending from the body (21), each of the plurality of connecting portions (22) being provided with a second mounting hole (221) aligned with a corresponding first mounting hole (12),
and wherein the hook portion (23) extends from one of the plurality of connecting portions (22).

6. The vehicle rear assembly (A) according to claim 5, wherein
the motor housing (2) further comprises a washer (222) embedded in the second mounting hole (221), the fastener (3) is pre-mounted to the washer (222), and the fastener is configured as a screw.

7. The vehicle rear assembly (A) according to any one of claims 1 to 6, wherein the motor housing (2) is made of plastic.

8. A vehicle, comprising the vehicle rear assembly (A) according to any one of claims 1 to 7.

9. An method of assembling the vehicle rear assembly (A) according to one of claims 1 to 7, comprising:
providing the tailgate inner panel (1) and the motor housing (2), wherein the motor housing (2) is pre-mounted with the plurality of fasteners;
passing the hook portion (23) through the through hole (11) via the first portion (111), such that the end of the hook portion (23) is capable of abutting against the tailgate inner panel (1), wherein the tailgate inner panel (1) and the motor housing (2) are separated by a spacing (H);
moving the hook (23) from the first portion (111) to the second portion (112);
attaching and fixedly connecting the motor housing (2) to the tailgate inner panel (1) through the plurality of fasteners (3).
